# EUROPEAN PATENT SPECIFICATION

(11) **EP 1 479 041 B1**
(45) Date of publication and mention of the grant of the patent: **07.06.2006**
(21) Application number: 03702935.2
(22) Date of filing: 18.02.2003
(51) Int. Cl.: G06K 19/077, G06K 19/08, G06F 1/00

(54) **RECORD CARRIER COMPRISING AN INTEGRATED CIRCUIT**
DATENTRÄGER MIT INTEGRIERTEM SCHALTKREIS
SUPPORT D'ENREGISTREMENT COMPRENANT UN CIRCUIT INTEGRE

(30) Priority: 22.02.2002 EP 02075730
(43) Date of publication of application: 24.11.2004
(73) Proprietor: Koninklijke Philips Electronics N.V., 5621 BA Eindhoven (NL)
(72) Inventor: KAHLMAN, Josephus, A., H., M., NL-5656 AA Eindhoven (NL)
(74) Representative: Bekkers, Joost J.J
(86) International application number: PCT/IB2003/000684
(87) International publication number: WO 2003/071477

(56) References cited:
- WO-A-02/17316
- WO-A-98/58376
- WO-A-99/38162
- DE-A- 19 506 313
- US-A- 5 652 838
- US-A1- 2001 047 820
- PATENT ABSTRACTS OF JAPAN vol. 009, no. 203 (P-381), 21 August 1985 (1985-08-21) & JP 60 065388 A (TOSHIBA KK), 15 April 1985 (1985-04-15)

## Description

The invention relates to a record carrier having a first area for storing information, and a second area comprising an integrated circuit, wherein transmitting means for transmitting additional information and receiving means for receiving a power supply signal for power supply of the integrated circuit are integrated in the integrated circuit, the receiving means comprising a light-sensitive sensor. The invention also relates to a device for reading a record carrier and an integrated circuit.

A record carrier, a device and an integrated circuit of the type indicated in the opening paragraph is described in non-prepublished PCT patent application with application number WO/EP01/09628 (NLO10233) (filed on 13,08.2001). This patent application discloses a record carrier having a first area (3) for storing information and a second area (4) comprising an integrated circuit (4¹). This integrated circuit comprises means for transmitting additional information and means for receiving a signal for power supply of the integrated circuit. The receiving means comprise a photodiode. In a preferred embodiment, the receiving means are also arranged to receive additional information.

It is an object of the invention to improve this record carrier, device and integrated circuit.

To this end, the record carrier according to the invention comprises an integrated circuit comprising frequency control means for controlling the frequency transmitted by the transmitting means. To this end, the device according to the invention further comprises frequency control means for controlling the frequency transmitted by the transmitting means. To this end, the integrated circuit further comprises frequency control means for controlling the frequency transmitted by the transmiting means.

The inventors have recognized that it can be convenient that the frequency at which the additional information is transmitted by the transmitting means present on the integrated circuit can be controlled. This control can be performed, externally, i.e. in the device for reading a record carrier, or internally, i.e. in the integrated circuit present on a record carrier. The frequency at which the additional information is transmitted by the transmitting means is dependent on the tolerances of the process used for manufacturing the integrated circuit and the current that runs through the photo-diode. The receipt of the additional information transmitted by the transmitting means can further be hindered by the occurrence of interference frequencies, e.g. present in the player, playing the record carrier.

In a preferred embodiment of the record carrier according to the invention the frequency control means comprise the transmitting means being directly powered by the light-sensitive sensor. In another preferred embodiment of the record carrier according to the invention the receiving means comprises detection means for detecting the average light power of the power supply signal and the transmitting means comprises tuning means for tuning the transmit frequency based on the detected average light power.

These embodiments have as an advantage that the frequency control means can be realized with relatively simple and cost-efficient elements. For example, the average light power can be detected by monitoring the read-out signals of a simple photo-diode.

In a preferred embodiment of the device according to the invention, the frequency control means comprise means for generating a control signal setting a desired transmit frequency f_{transmit, desired}. In another preferred embodiment of the device according to the invention, the control signal is generated by a frequency error f_{error,} which is equal to fₜᵣₐₙₛₘᵢₜ - f_{transmit, desired}.

These embodiments have as an advantage that the control signal can be used for easily modifying the operating conditions of the device.

In a preferred embodiment of the integrated circuit according to the invention the frequency control means comprise the transmitting means being directly powered by the light-sensitive sensor. In another preferred embodiment of the integrated circuit according to the invention the receiving means comprises detection means for detecting the average light power of the power supply signal and the transmitting means comprises tuning means for tuning the transmit frequency based on the detected average light power.

Optical discs with integrated circuits or chips are known from the prior art. United States patent US 5,862,117 discloses a compact disc with a chip, in which the compact disc has an antenna, which communicates with the chip for communication between the chip and a receiver situated in the compact disc player. In addition to the chip and the antenna, the compact disc also has connections for connecting the turns of the coil to the chip. This renders the production of the compact disc complicated and expensive.

German patent publication DE 195 06 313 Al discloses a compact disc with a chip, in which the energy required for the chip is supplied by a device in the drive mechanism of the compact disc player. The compact disc is provided with a series arrangement of photodiodes and an LED, both of which communicate with the chip. The device is also provided with a series arrangement of photodiodes and an LED. Both the energy supply and the communication between the chip and the device can be ensured by the photodiodes and LEDs. Since the compact disc also comprises a series arrangement ofphotodiodes and an LED in addition to a chip, the production of the compact disc will be more complicated and more expensive.

US patent US 5,652,838 discloses a CD-ROM with a chip, in which the CD-ROM comprises light-sensitive sensors. The CD-ROM also comprises a battery for power supply of the chip. Since the CD-ROM, in addition to the chip and the battery, also comprises a plurality of light-sensitive sensors and connections for connecting these sensors to the chip, the production of the compact disc will be more complicated and more expensive. WO 98/58376 A1 discloses an intelligent disc that includes a disc portion for storing information and an intelligent circuit portion for processing information. The information to be reproduced in an external device is stored in the disc portion and parameters for controlling reproduction of information in the external device are stored in the intelligent circuit portion. The information is reproduced by the external device using the parameters.

These and other aspects of the invention are apparent from and will be elucidated with reference to the embodiments described hereinafter.

In the drawings.
Fig. 1 shows diagrammatically a record carrier according to the invention,
Fig. 2 shows diagrammatically a reading device according to the invention,
Fig. 3 shows an embodiment of the system according to non-prepublished PCT patent application with application number WO/EP01/09628.
Fig. 4 shows an embodiment of the device according to the invention for reading the record carrier,
Fig. 5 shows a preferred embodiment of the device according to the invention for reading the record carrier,
Fig. 6 shows another preferred embodiment of the device according to the invention for reading the record carrier,
Fig. 7 shows an embodiment of the integrated circuit according to the invention,
Fig. 8 shows another embodiment of the integrated circuit according to the invention.

Corresponding elements in the different Figures have identical reference numerals.

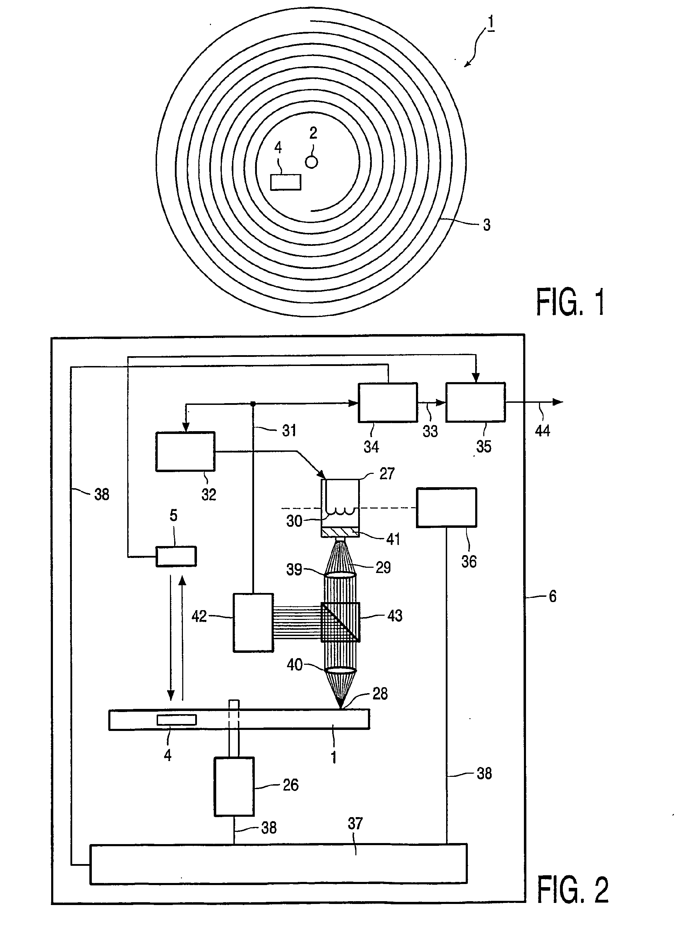

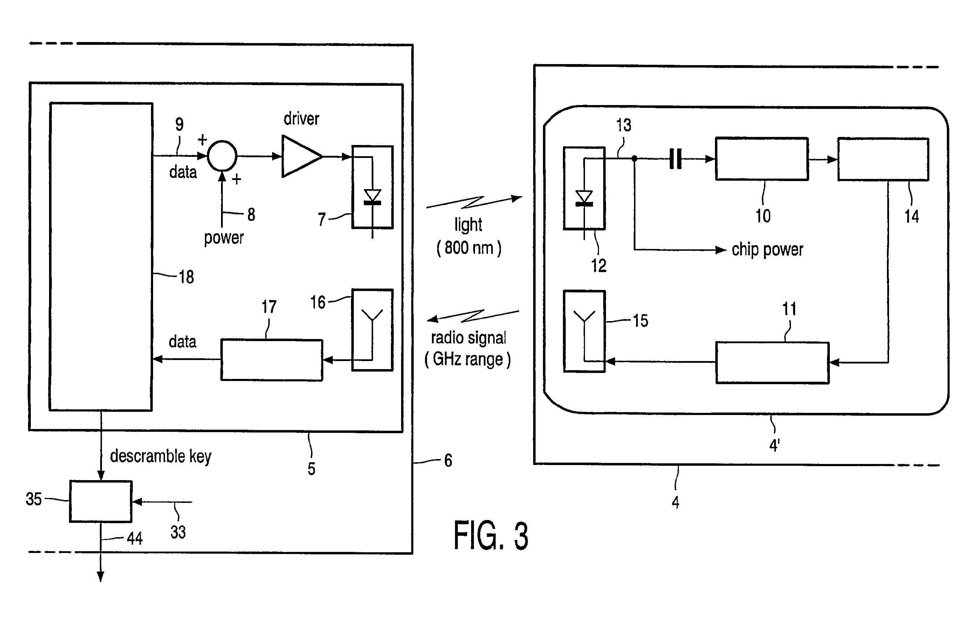

Fig. 1 shows a concentric record carrier 1, which may comprise information, with a central aperture 2 and a track 3. The track 3 is arranged in a spiral or concentric pattern and comprises a first area for storing information. A second area 4 is also present on the record carrier 1, the second area comprising an integrated circuit with transmitting means and receiving means for transmitting and receiving additional information. For suitable transmitting means and receiving means, see Fig. 3 and its explanation.

Fig. 2 shows a device 6 that is adapted to read the record carrier 1. The device 6 is equipped with drive means 26 for rotating the record carrier 1, and a read head 27 for reading the track 3 on the record carrier. The read head 27 comprises an optical system of a known type, intended to generate a light spot 28 to be focused on the track of the record carrier by means of a light ray 29 that is guided by optical elements such as a collimator lens 39 for collimating the light ray and an objective lens 40 for focusing the light ray. This light ray 29 is generated by a radiation source 41, for example, an infrared laser diode having a wavelength of 780 nm and an optical power of 3 mW. The read head 27 further comprises an actuator (not shown) for focusing the light ray 29 on the record carrier and a tracking actuator 30 for fine-positioning the light spot 28 in the radial direction in the center of the track. Following the track by means of the laser beam may also be effected by varying the position of the objective lens 40. After having been reflected by the record carrier, the light ray 29 is detected by a detector 42 of a known type, for example, a quadrant detector and generates detector signals 31 such as, for example, a read signal, a tracking error signal and a focusing error signal. Use may be made of, for example, a beam-splitting cube 43, a polarizing beam-splitting cube, a pellicle or a retarder. The device 6 has tracking means 32, which are coupled to the read head 27 for receiving the tracking error signal from the read head 27 and for controlling the tracking actuator 30. During reading, the read signal is converted into output information in the read means 34, which is indicated by an arrow 33. The read means 34 comprise, for example, a channel decoder for converting the detected channel words into source words, and an error corrector for correcting errors that are present in the read signal. The device 6 further comprises positioning means 36 for coarse positioning of the read head 27 in the radial direction of the track, and a system control unit 37 for receiving commands from a controlling computer system or from a user, and for controlling the device by means of control lines 38, for example, a system bus connected to the drive means 26, the positioning means 36, the tracking means 32 and the read means 34. To this end, the system control unit 37 comprises a control circuit, for example, a microprocessor, a program memory and control gates for performing the procedures as described below. The system control unit 37 may also be implemented in a state machine in logic circuits.

The device 6 further comprises receiving and transmitting means 5 for receiving and transmitting additional information stored in the integrated circuit that is present in the second area 4 on the record carrier 1. In a preferred embodiment, this additional information comprises a key for scrambling and/or descrambling the information. This descramble key is added to descrambling means 35. The scrambled output information 33 is subsequently descrambled in these descrambling means and subsequently passed on, which is indicated by an arrow 44. This descrambled information may comprise, for example, audio or video information that may be displayed on an appropriate apparatus. It should be noted that the terms scrambling and descrambling of information are also understood to mean encrypting and decrypting. In fact, it will be evident to those skilled in the art that there is no fundamental difference between scrambling and encrypting information. In this embodiment, the information is first converted into source words and error-corrected in the read means 34, and subsequently descrambled in the descrambling means 35. However, the invention is not limited to this sequence. Those skilled in the art will understand that this sequence can also be reversed. For suitable transmitting means and receiving means, see Fig. 3 and its explanation. In a preferred embodiment of the device according to the invention, the device also comprises write means for providing optically readable signs on the record carrier 1. In this case, the record carrier must of course be a writable record carrier such as, for example, a CD-R disc or a DVD+RW disc.

In this embodiment of the device according to the invention, the device comprises detection means (such as, for example, the detector 42 and the read means 34) for detecting optically readable signs representing the information on the record carrier 1. In another embodiment of the device according to the invention, the device comprises only receiving and transmitting means 5 for reading and receiving additional information stored in the integrated circuit, which is present in the second area 4 on the record carrier 1. In this case, the information on the record carrier will have to be detected by a separate device.

Fig. 3 shows an embodiment of the system according to non-prepublished PCT patent application with application number WO/EP01/09628. In this embodiment, the optical transfer of energy 8 and data 9 to the integrated circuit 4', present on the record carrier 1, takes place via a light-emitting diode (LED) 7, which is present in the receiving and transmitting means 5 of the device 6. The light coming from the LED 7 is collected by a photodiode 12 on the integrated circuit 4'. The energy for power supply of the integrated circuit on the record carrier is obtained from the signal 13 coming from the photodiode 12. The signal 13 is also applied to detector 10. The detector is adapted to receive additional information from the device. This additional information is used in a copy protection algorithm 14. In a preferred embodiment, this copy protection algorithm is used for generating, under the influence of the received additional information, a descrambling key for descrambling the information on the record carrier. This descrambling key may be subsequently applied to a radio transmitter 11 that can subsequently transmit this key to the device 6 through an antenna 15. The device comprises a radio receiver 17 for receiving the key through an antenna 16. This key may be subsequently applied to a copy protection algorithm 18 that is present in the receiving and transmitting means 5. The key may be subsequently applied to the descrambling means 35 for descrambling the information from the record carrier.

Since the transmitting means and receiving means in the second area 4 are integrated in the integrated circuit 4' and since no external contacts need to be present on the device 6, because the communication between the device and the record carrier 1 takes place without contact, the production costs can be reduced and the production can be simplified. This embodiment has the further advantage that the communication between the integrated circuit and the device can also be established when the disc is in motion, i.e. rotates. This embodiment has the further advantage that the transfer of energy for the power supply of the integrated circuit (in this case by means of the LED 7 and the photodiode 12) appears to be relatively simple, in any case simpler than energy transfer by means of a radio transmitter/receiver combination. It has also been found that the incorporation of the radio transmitter 11 on the chip is more advantageous as regards energy consumption than the incorporation of a light source, for example an LED.

As has been explained before, information is exchanged via a bi-directional communication channel between the medium to be protected (the record carrier 1) and the fixed world (the reading device 6) so as to achieve copy protection of the information on the record carrier. By means of the copy protection algorithms 14 and 18, which are available on both sides, this communication channel is secured, whereafter the descrambling key is safely passed on from the record carrier to the device. Such a bi-directional channel with the record carrier may therefore be realized by incorporating an integrated circuit in a record carrier and by communicating with this integrated circuit from the fixed world. From this fixed world, for example, the playback device or writing device of a compact disc player, the required power is sent via an optical channel to the integrated circuit in or on the disc, for example, by means of a high-power LED. The additional information is modulated on this signal from the decoder copy protection algorithm. This additional information is applied to the detector 10 on the integrated circuit. This detector detects the additional information, which is subsequently processed in the copy protection algorithm 14. The descrambling key is subsequently transmitted in a safe manner (for example, by scrambling the descrambling key with a key present in the device, for example, a private key) via a high-frequency radio signal to the receiving and transmitting means 5 of the device 6. These means comprise a radio receiver 17 with an antenna 16 that detects this signal and passes it on to the copy protection algorithm 18.

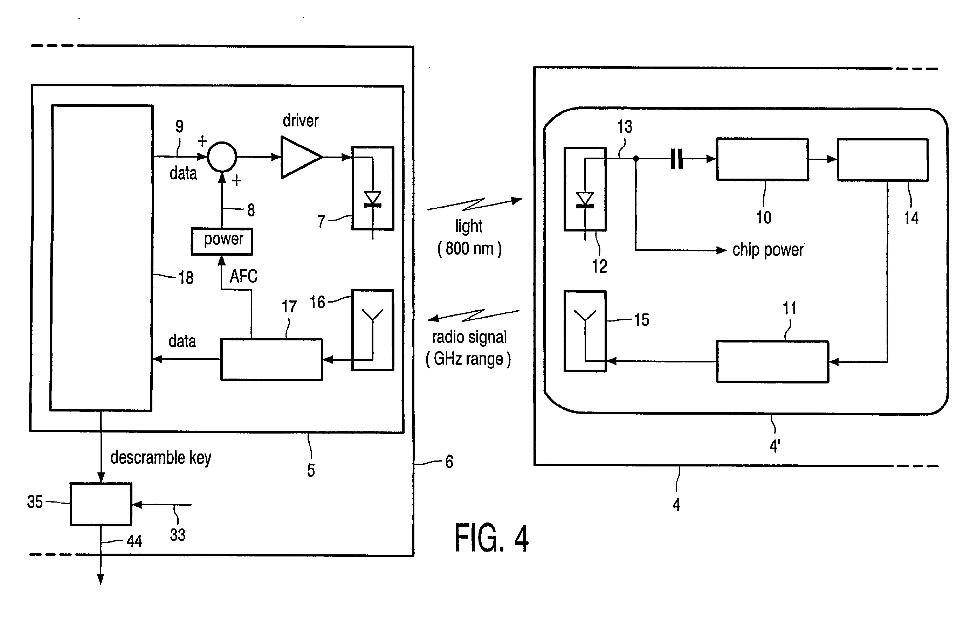

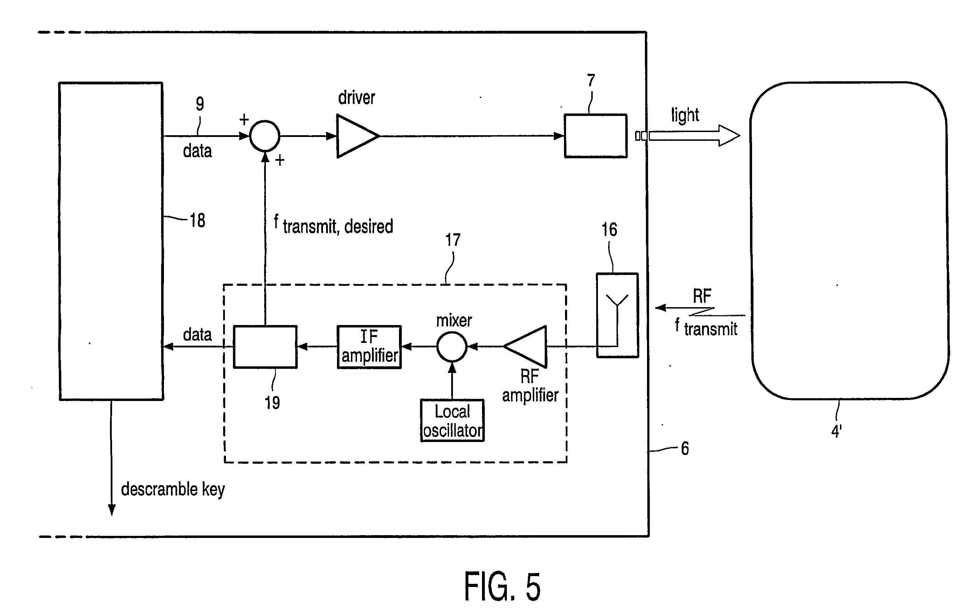

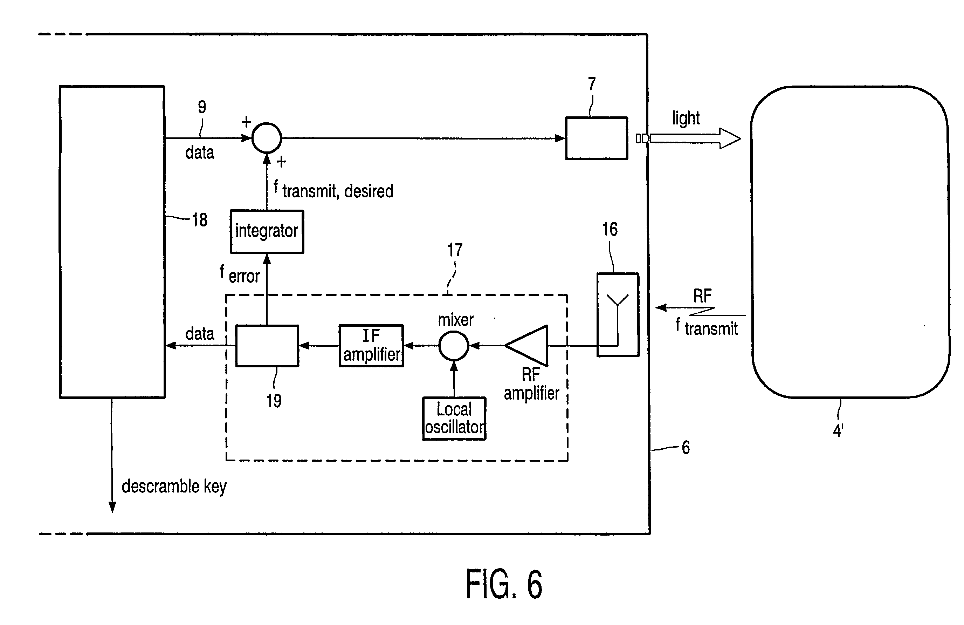

Fig. 4 shows an embodiment of the device according to the invention for reading the record carrier. In this embodiment, the radio receiver 17 modulates the light power by steering the power, which drives the LED 7. By changing the light power emitted by the LED, the amount of light received by the photodiode 12 can be changed, and, as a result, the voltage feeding the integrated circuit. Due to the fact that the transmit frequency is dependent on this voltage, the transmit frequency on which the additional information is transmitted can be controlled, is set to a desired transmit frequency. In this way, Automatic Frequency Control (AFC) is realized. Fig. 5 shows a preferred embodiment of the device according to the invention for reading the record carrier. In this embodiment the frequency control means comprise means for generating a control signal setting a desired transmit frequency fₜᵣₐₙₛₘᵢₜ, _{desired}. The receiving frequency is determined by the frequency of the local oscillator in the radio receiver 17. In the demodulator 19, a control signal is derived which changes the average light power in order to arrive at the desired transmit frequency. By choosing the desired transmit frequency, the receiver is able to select the most appropriate receiving frequency, i.e. the frequency for which minimal interference occurs with other signals present in the device. Fig. 6 shows another preferred embodiment of the device according to the invention for reading the record carrier. In this embodiment, the receiving frequency is likewise determined by the frequency of the local oscillator in the receiver. The control signal is generated by a frequency error fₑᵣᵣₒᵣ, which is equal to fₜᵣₐₙₛₘᵢₜ- fₜᵣₐₙₛₘᵢₜ, desired. The frequency error (fₜᵣₐₙₛₘᵢₜ- f_{desired}) is fed to an integrator that changes the average light power.

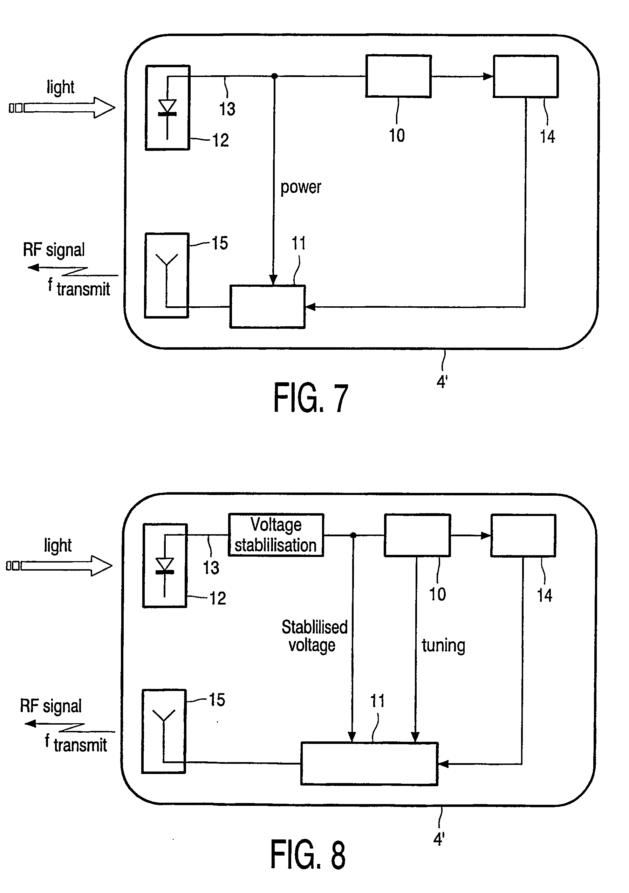

Fig. 7 shows an embodiment of the integrated circuit according to the invention. In this embodiment, the average transmit frequency fₜᵣₐₙₛₘᵢₜ is determined by the average light power because the photodiode 12 powers the transmitting means 11, i.e. the RF oscillator, directly. Fig. 8 shows another embodiment of the integrated circuit according to the invention. In this embodiment, a voltage for feeding the integrated circuit, resulting from the detected light, is stabilized before it is directed to the transmitting means 11 and the average light power is detected by the detector 10, e.g. a light demodulator. The light demodulator 10 tunes the transmitting means 11, e.g. a RF oscillator for determining the desired transmit frequency. For this purpose, the RF oscillator comprises tuning means for tuning the transmit frequency based in the detected the average light power. These tuning means can for example be a varicap diode.

It will be evident from the foregoing that the system according to the invention has the following advantages: it can be realized at low cost due to the absence of external connections, it can be easily used in optical record carriers, i.e. without complicating the manufacture of the record carriers, simple changes in the existing reading devices provide the possibility of communicating in the manner described above.

In a preferred embodiment of the record carrier, the receiving means are also adapted to receive additional information. Advantageously, the additional information comprises an encryption algorithm for safety protection of the communication channels. Advantageously, the integrated circuit is contactlessly readable. Advantageously, the integrated circuit comprises means for generating a first communication channel operating at a first frequency, and means for generating a second communication channel operating at a second frequency, the first frequency being substantially unequal to the second frequency. Advantageously, the first communication channel is adapted for power supply of the integrated circuit and for data transmission. Advantageously, the additional information comprises a key for scrambling and/or descrambling the information. Advantageously, the integrated circuit comprises a memory in which the additional information is stored. Advantageously, the record carrier is a pre-recorded record carrier. Advantageously, the first frequency is in an optical frequency range and the second frequency is in a radio frequency range.

In a preferred embodiment of the device, the device comprises means for generating a first communication channel operating at a first frequency, and means for generating a second communication channel operating at a second frequency, the first frequency being substantially unequal to the second frequency. Advantageously, the first communication channel is adapted for power supply of the integrated circuit and for data transmission. Advantageously, the device comprises write means for providing optically readable signs on a recordable record carrier. Advantageously, the device comprises receiving means and transmitting means for reading and receiving additional information stored in the integrated circuit. Advantageously, the device comprises an optical transmitter, for example, an LED, and a radio receiver. Advantageously, the additional information comprises an encryption algorithm for safety protection of the communication channels.

In a preferred embodiment of the integrated circuit, the receiving means are also adapted to receive additional information. Advantageously, the integrated circuit comprises a light-sensitive sensor, for example, a photodiode, and a radio transmitter.

Although the invention has been elucidated with reference to the embodiments described above, it will be evident that other embodiments may be alternatively applied to achieve the same object. The invention is not limited to LEDs as light sources but may also be used with lasers or even sunlight as a light source. The record carrier is, for example, not limited to optical record carriers such as CD discs or DVD discs. The invention may be used for any type of record carrier. The reading device is thus neither limited to reading devices for reading optical record carriers. The invention may also be used in car keys, credit cards, identification tags and all kinds of devices in which identification of the user of the device plays a role and in which these devices comprise an area for storing the information to be protected from unauthorized copying.

It must further be noted that the term "comprises/comprising" when used in this specification, including the claims, is taken to specify the presence of stated features, integers, steps or components, but does not exclude the presence or addition of one or more other features, integers, steps, components or groups thereof. It must also be noted that the word "a" or "an" preceding an element in a claim does not exclude the presence of a plurality of such elements. Moreover, any reference signs do not limit the scope of the claims; the invention can be implemented by means of both hardware and software, and several "means" may be represented by the same item of hardware.

## Claims

1. A record carrier (1) comprising a first area (3) for storing information, and a second area (4) comprising an integrated circuit (4¹), wherein transmitting means (11, 15) for transmitting additional information and receiving means (10, 12) for receiving a light power supply signal for power supply of the integrated circuit are integrated in the integrated circuit, the receiving means comprising a light-sensitive sensor (12),
wherein the integrated circuit further comprises frequency control means for controlling the frequency transmitted by the transmitting means,
wherein the receiving means (10) comprises detection means for detecting the average light power of the light power supply signal and the transmitting means (11) comprises tuning means for tuning the transmit frequency based on the detected average light power.

2. A record carrier as claimed in claim 1, wherein the frequency control means comprises the transmitting means (11,15) being directly powered by the light-sensitive sensor.

3. A system for reading a record carrier (1), the system comprising the record carrier and a device (6) for reading information on the record carrier (1),
the record carrier (1) comprising a first area (3) for storing information, and a second area (4) comprising an integrated circuit (4¹), wherein transmitting means (11,15) for transmitting additional information and receiving means (10,12) for receiving a light power supply signal for power supply of the integrated circuit are integrated in the integrated circuit, the receiving means comprising a light-sensitive sensor,
the device (6) comprising detection means (42) for detecting optically readable signs representing the information, and receiving means (16) and transmitting means (7) for receiving and transmitting additional information stored in the integrated circuit, wherein the device further comprises frequency control means for controlling the frequency transmitted by the transmitting means.

4. A system as claimed in claim 3, wherein the frequency control means comprises means for generating a control signal setting a desired transmit frequency f transmit, desired.

5. A system as claimed in claim 4, wherein the control signal is generated by a frequency error f error, which is equal to fₜᵣₐₙₛₘᵢₜ ―f_{transmit, desied}.

6. An integrated circuit comprising transmitting means (11, 15) for transmitting additional information, and receiving means (10, 12) for receiving a light power supply signal for power supply of the integrated circuit, the receiving means comprising a light-sensitive sensor, for example, a photodiode, wherein the integrated circuit further comprises frequency control means for controlling the frequency transmitted by the transmitting means,
wherein the receiving means (10) comprises detection means for detecting the average light power of the light power supply signal and the transmitting means (11) comprises tuning means for tuning the transmit frequency based on the detected average light power.

7. An integrated circuit as claimed in claim 6, wherein the frequency control means comprises the transmitting means being directly powered by the light-sensitive sensor.

## Patentansprüche

1. Datenträger (1) mit einem ersten Bereich (3) zum Speichern von Informationen und einem zweiten Bereich (4) mit einem integrierten Schaltkreis (4'), wobei Übertragungsmittel (11, 15) zum Übertragen von zusätzlichen Informationen und Empfangsmittel (10, 12) zum Empfangen eines Licht-Stromversorgungssignals zur Stromversorgung des integrierten Schaltkreises in dem integrierten Schaltkreis integriert sind, wobei die Empfangsmittel einen lichtempfindlichen Sensor umfassen (12),
wobei der integrierte Schaltkreis des Weiteren Frequenzsteuerungsmittel zum Steuern der durch die Übertragungsmittel übertragenen Frequenz umfasst,
wobei die Empfangsmittel (10) Detektionsmittel zum Detektieren der durchschnittlichen Lichtleistung des Licht-Stromversorgungssignals umfassen und die Übertragungsmittel (11) Abstimmmittel zum Abstimmen der Sendefrequenz auf der Grundlage der detektierten durchschnittlichen Lichtleistung umfassen.

2. Datenträger nach Anspruch 1, wobei die Frequenzsteuerungsmittel die Übertragungsmittel (11, 15) umfassen, die direkt durch den lichtempfindlichen Sensor mit Strom versorgt werden.

3. System zum Lesen eines Datenträgers (1), wobei das System den Datenträger und eine Vorrichtung (6) zum Lesen von Informationen auf dem Datenträger (1) umfasst,
wobei der Datenträger (1) einen ersten Bereich (3) zum Speichern von Informationen und einen zweiten Bereich (4) umfasst, der einen integrierten Schaltkreis (4¹) umfasst, wobei Übertragungsmittel (11, 15) zum Übertragen von zusätzlichen Informationen und Empfangsmittel (10, 12) zum Empfangen eines Licht-Stromversorgungssignal zur Stromversorgung des integrierten Schaltkreises in den integrierten Schaltkreis integriert sind, wobei die Empfangsmittel einen lichtempfindlichen Sensor umfassen,
wobei die Vorrichtung (6) Detektierungsmittel (42) zum Detektieren optisch lesbarer Zeichen, welche die Informationen darstellen, sowie Empfangsmittel (16) und Übertragungsmittel (7) zum Empfangen bzw. Übertragen von zusätzlichen Informationen, die in dem integrierten Schaltkreis gespeichert sind, umfasst, wobei die Vorrichtung des Weiteren Frequenzsteuerungsmittel zum Steuern der durch die Übertragungsmittel übertragenen Frequenz umfasst.

4. System nach Anspruch 3, wobei die Frequenzsteuerungsmittel Mittel zum Erzeugen eines Steuersignals umfassen, das eine gewünschte Sendefrequenz f_{transmit, desired} einstellt.

5. System nach Anspruch 4, wobei das Steuersignal durch einen Frequenzfehler fₑᵣᵣₒᵣ erzeugt wird, der gleiche fₜᵣₐₙₛₘᵢₜ minus f_{transmit, desired} ist.

6. Integrierter Schaltkreis, der Übertragungsmittel (11, 15) zum Übertragen von zusätzlichen Informationen und Empfangsmittel (10, 12) zum Empfangen eines Licht-Stromversorgungssignals zur Stromversorgung des integrierten Schaltkreises umfasst, wobei die Empfangsmittel einen lichtempfindlichen Sensor, zum Beispiel eine Fotodiode umfassen, wobei der integrierte Schaltkreis des Weiteren Frequenzsteuerungsmittel zum Steuern der durch die Übertragungsmittel übertragenen Frequenz umfasst,
wobei die Empfangsmittel (10) Detektionsmittel zum Detektieren der durchschnittlichen Lichtleistung des Licht-Stromversorgungssignals umfassen und die Übertragungsmittel (11) Abstimmmittel zum Abstimmen der Sendefrequenz auf der Grundlage der detektierten durchschnittlichen Lichtleistung umfassen.

7. Integrierter Schaltkreis nach Anspruch 6, wobei die Frequenzsteuerungsmittel die Übertragungsmittel umfassen, die direkt durch den lichtempfindlichen Sensor mit Strom versorgt werden.

## Revendications

1. Support d'enregistrement (1) comprenant une première zone (3) pour le stockage de l'information, et une seconde zone (4) comprenant un circuit intégré (4¹), dans lequel des moyens de transmission (11,15) pour la transmission d'information supplémentaire et des moyens de réception (10,12) pour la réception d'un signal d'alimentation lumineuse du circuit intégré, sont intégrés dans le circuit intégré, le moyen de réception comprenant un capteur photosensible (12),
dans lequel le circuit intégré comprend en outre un moyen de réglage de fréquence pour régler la fréquence transmise par le moyen de transmission,
dans lequel le moyen de réception (10) comprend un moyen de détection pour détecter la puissance lumineuse moyenne du signal d'alimentation lumineuse et du moyen de transmission (11), comprenant un moyen d'accord pour accorder la fréquence transmise, basée sur la puissance lumineuse moyenne transmise.

2. Support d'enregistrement selon la revendication 1, dans lequel le moyen de réglage de fréquence comprend des moyens de transmission (11,15) directement alimentés par le capteur photosensible.

3. Système de lecture d'un support d'enregistrement (1), le système comprenant un support d'enregistrement et un dispositif (6) pour la lecture de l'information sur le support d'enregistrement (1),
le support d'enregistrement (1) comprenant une première zone (3) pour le stockage de l'information, et une seconde zone (4) comprenant un circuit intégré (4¹), dans lequel les moyens de transmission (11,15) pour la transmission, d'information supplémentaire et des moyens de réception (10,12) pour recevoir un signal d'alimentation lumineuse pour alimentation en énergie du circuit intégré sont intégrés dans le circuit intégré, le moyen de réception comprenant un capteur photosensible,
le dispositif (6) comprenant un moyen de détection (42) pour détecter des signes optiquement lisibles représentant l'information, et un moyen de réception (16) et un moyen de transmission (7) pour recevoir et transmettre l'information supplémentaire stockée dans le circuit intégré, dans lequel le dispositif comprend en outre un moyen de réglage de fréquence pour régler la fréquence transmise par le moyen de transmission de fréquence.

4. Système selon la revendication 3, dans lequel le moyen de réglage de fréquence comprend un moyen pour générer un signal de commande fixant une fréquence de transmission désirée f_{transmise, désirée}.

5. Système selon la revendication 4, dans lequel le signal de commande est généré par une erreur de fréquence fₑᵣᵣₒᵣ, qui est égale à fₜᵣₐₙₛₘᵢₛₑ - f_{transmise,désirée}.

6. Circuit intégré comprenant les moyens de transmission (11,15) pour la transmission d'information supplémentaire, et des moyens de réception (10,12) pour recevoir un signal d'alimentation lumineuse pour alimentation du circuit intégré, les moyens de réception comprenant un capteur photo-sensible, par exemple, une photodiode,
dans lequel le circuit intégré comprend en outre un moyen de réglage de fréquence pour régler la fréquence transmise par le moyen de transmission,
dans lequel le moyen de réception (10) comprend un moyen de détection pour détecter la puissance lumineuse moyenne du signal d'alimentation lumineuse et le moyen de transmission (11) comprend un moyen d'accord pour accorder la fréquence transmise, basée sur la puissance lumineuse moyenne détectée.

7. Circuit intégré comme revendiqué dans la revendication 6, dans lequel le moyen de réglage de fréquence comprend un moyen de transmission directement alimenté par le capteur photosensible.
